(19) 

**Europäisches Patentamt**
**European Patent Office**
**Office européen des brevets**

(11) **EP 4 712 326 A1**

(12) **EUROPEAN PATENT APPLICATION**

(43) Date of publication:
**18.03.2026 Bulletin 2026/12**

(21) Application number: **25196984.6**

(22) Date of filing: **20.08.2025**

(51) International Patent Classification (IPC):
**H02M 1/10** (2006.01)  **H02M 1/14** (2006.01)
**H02M 3/335** (2006.01)  **H02M 5/293** (2006.01)
**H02M 5/297** (2006.01)  **H02M 5/12** (2006.01)
**H02M 7/48** (2007.01)

(52) Cooperative Patent Classification (CPC):
**H02M 1/10; H02M 1/143; H02M 3/33576;**
**H02M 5/2932; H02M 5/297;** H02M 5/12;
H02M 7/4807

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **11.09.2024 JP 2024157282**
**07.07.2025 JP 2025114333**

(71) Applicants:
• **Yazaki Corporation**
**Tokyo 108-0075 (JP)**
• **National University Corporation**
**Nagaoka University of Technology**
**Nagaoka-shi**
**Niigata 940-2188 (JP)**

(72) Inventors:
• **Itoh, Junichi**
**940-2188 Nagaoka-shi, Niigata (JP)**
• **Takahashi, Yuichi**
**410-1194 Susono-shi, Shizuoka (JP)**
• **Horiuchi, Satoru**
**410-1194 Susono-shi, Shizuoka (JP)**
• **Enomoto, Michito**
**410-1194 Susono-shi, Shizuoka (JP)**
• **Maezaki, Daisuke**
**410-1194 Susono-shi, Shizuoka (JP)**
• **Watanabe, Hiroki**
**940-2188 Nagaoka-shi, Niigata (JP)**

(74) Representative: **Grünecker Patent- und**
**Rechtsanwälte**
**PartG mbB**
**Leopoldstraße 4**
**80802 München (DE)**

(54) **AC/DC CONVERTER WITH 3-1 PHASE MATRIX CONVERTER, TRANSFORMER, ACTIVE RECTIFIER AND POWER COMPENSATION CIRCUIT FOR SINGLE-PHASE OPERATION**

(57)  [Problems to be solved]
It is intended to provide a compact power conversion device.
[Solution]
A power conversion device 100 includes a three-phase to single-phase matrix converter 110; an AC-DC converter 130; a transformer 120 connected between the three-phase to single-phase matrix converter 110 and the AC-DC converter 130; and a power ripple compensation circuit 150 including an inductor L51 and a capacitor Cbuf connected in series, wherein the power ripple compensation circuit 150 is connected between a center tap of a winding W22 on the AC-DC converter 130 side of the transformer 120 and a negative pole side of the AC-DC converter 130.

FIG. 1

EP 4 712 326 A1

**Description**

[TECHNICAL FIELD]

The present invention relates to a power conversion device, a control method thereof, and a control program.

[BACKGROUND ART]

Conventionally, as a charger for electric vehicles, a charger including a rectifier, a PFC (Power Factor Correction) circuit, and a DC-DC converter has been used (for example, see Patent Document 1). In such charger, a DC link capacitor is disposed between the PFC circuit and the DC-DC converter to smooth the DC power input to the DC-DC converter. Such DC link capacitor is a factor that make the charger to become larger.

In Patent Document 2, a charging including a three-phase to single-phase matrix converter, a transformer, and an AC-DC convert is disclosed therein. According to this charger, the three-phase to single-phase matrix converter configured to directly convert the three-phase AC power to the single-phase AC power such that the DC link converter is unnecessary and it is possible to make the charger to be compact.

[CITATION LIST]

[Patent Documents]

[Patent Document 1] JP 2013-158240A
[Patent Document 2] JP 2017-528102A

[SUMMARY OF THE INVENTION]

[Technical Problem]

There are various types of power supply specifications for charging equipment currently installed, such as three-phase 22kW/32A, three-phase 11kW/16A, single-phase 7.2 kW/32A, and single-phase 3.6 kW/16A. The charger disclosed in Patent Document 2 can use a three-phase AC power supply, however, a single-phase AC power supply is unable to be used.

An object of the present invention is to provide a compact power converter device.

[Solution to Problem]

In order to solve the above-described problem, a power conversion device according to an embodiment of the present invention includes a three-phase to single-phase matrix converter; an AC-DC converter; a transformer connected between the three-phase to single-phase matrix converter and the AC-DC converter; and a power ripple compensation circuit including an inductor and a capacitor connected in series, wherein the power ripple compensation circuit is connected between a center tap of a winding on the AC-DC converter side of the transformer and a negative pole side of the AC-DC converter.

In order to solve the above-described problem, a control method according to an embodiment of the present invention is a control method executed by a computer for controlling a power conversion device, wherein the power conversion device includes a three-phase to single-phase matrix converter; an AC-DC converter; a transformer connected between the three-phase to single-phase matrix converter and the AC-DC converter; and a power ripple compensation circuit including an inductor and a capacitor connected in series, wherein the power ripple compensation circuit is connected between a center tap of a winding on the AC-DC converter side of the transformer and a negative pole side of the AC-DC converter, the control method comprising a step of controlling a switch of the three-phase to single-phase matrix converter and a switch of the AC-DC converter so as to use the capacitor of the power ripple compensation circuit to compensate a ripple of an input power that is input from the single-phase AC power supply when a single-phase AC power supply is connected to the three-phase to single-phase matrix converter.

A control program according to an embodiment of the present invention causes a computer to execute the above-described control method.

[Effect of the Invention]

According to the present invention, it is possible to provide a compact power conversion device.

[BRIEF DESCRIPTION OF THE DRAWINGS]

Fig. 1 is a view showing a power conversion device 100 according to an embodiment of the present invention.
Fig. 2 is a view describing the power conversion device 100 connected with a three-phase AC power supply 200 and a battery 400.
Fig. 3 is a view describing the power conversion device 100 connected with a single-phase AC power supply 300 and a battery 400.
Fig. 4 is a view showing an example of switches S11-S16.
Fig. 5 is a view describing a relationship between an instantaneous power value pin of the single-phase AC power input from the single-phase AC power supply 300 and an instantaneous power value pbuf of the power output from a capacitor Cbuf.
Fig. 6 is a view showing an example of a relationship between an output voltage v1 of a three-phase to single-phase matrix converter 110 and an input voltage v2 of an AC-DC converter 130.
Fig. 7 is a view describing a flow of electric power on the AC-DC converter 130 side during a charging period.
Fig. 8 is a view describing a flow of electric power on the AC-DC converter 130 side during a discharging period.
Fig. 9 is a view showing an example of a relationship between an output voltage v1 of a three-phase to single-phase matrix converter 110 and an input voltage v2 of an AC-DC converter 130.
Fig. 10 is a view showing an example of processing operations executed in a control portion 140.
Fig. 11 is a view showing an example of a relationship between the input voltage v2 of the AC-DC converter 130 and the switching control of the switches S31-S34 of the AC-DC converter 130.
Fig. 12 is a view showing an example of a relationship between the input voltage v2 of the AC-DC converter 130 and the switching control of the switches S31-S34 of the AC-DC converter 130.
Fig. 13 is a view showing another example of the power ripple compensation circuit 150.

[DESCRIPTION OF EMBODIMENTS]

<Power conversion device 100>

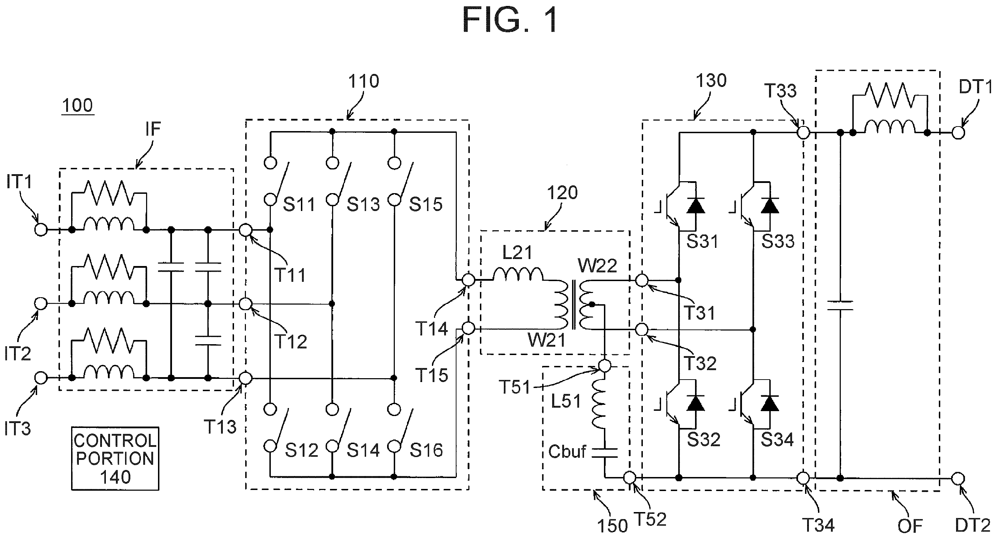

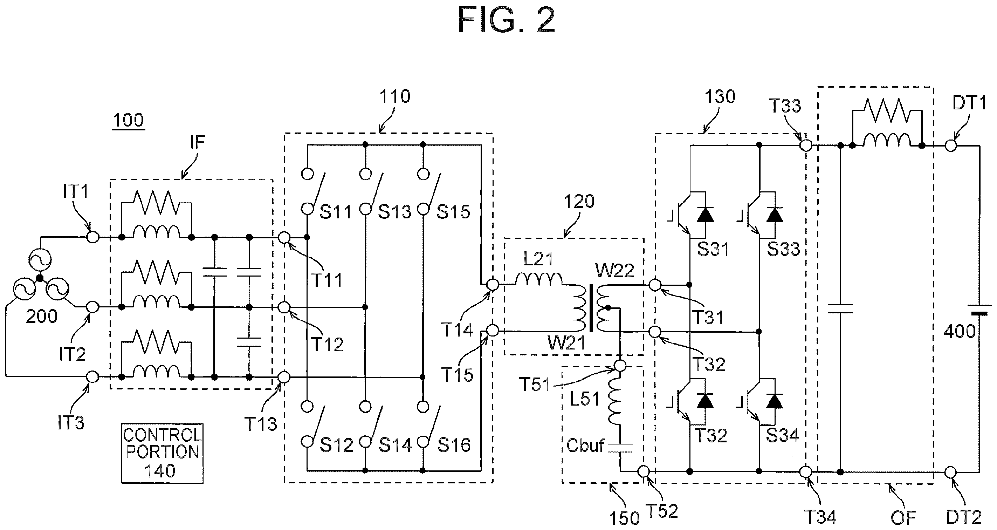

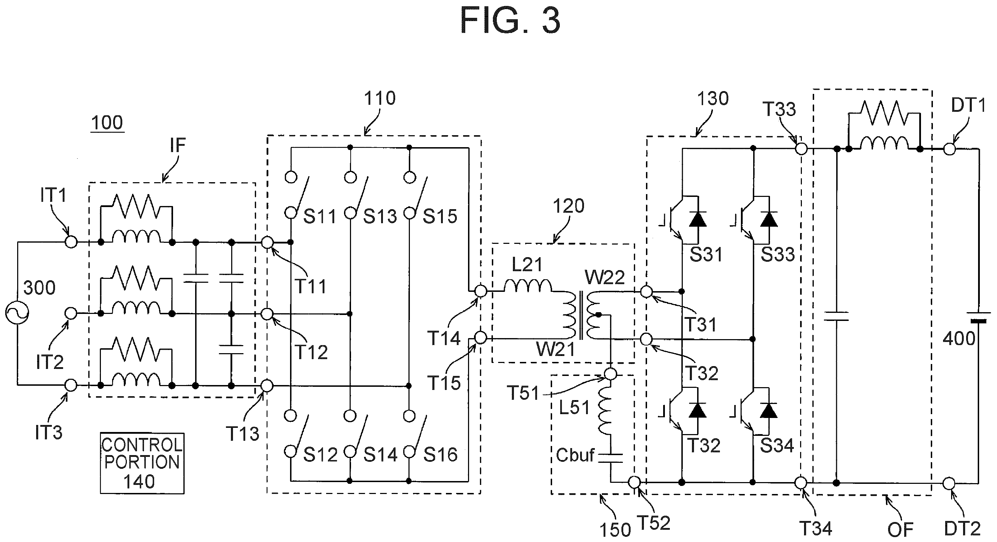

Fig. 1 is a view showing a power conversion device 100 according to an embodiment of the present invention. The power conversion device 100 is, for example, a power conversion device installed in an automobile.
The power conversion device 100 includes a three-phase to single-phase matrix converter 110, a high-frequency transformer 120, an AC-DC converter 130, and a control portion 140. Also, the power conversion device 100 includes three terminals for AC power IT1, IT2, IT3 (that is, a first terminal for AC power IT1, a second terminal for AC power IT2, and a third terminal for AC power IT3) for connecting with an AC power supply (three-phase AC power 200, single-phase AC power 300) and a load, and two terminals for DC power DT1, DT2 (that is, a positive DC power terminal DT1 and a negative DC power terminal DT2), wherein the positive DC power terminal DT1 is connected with a positive pole of the battery 400 and the load, and the negative DC power terminal DT2 is connected with a negative pole of the battery 400 and the load.
As shown in Fig. 2, in a case in which the three-phase AC power supply 200 is connected to the terminals for AC power IT1, IT2, IT3, and the battery 400 is connected to the terminals for DC power DT1, DT2, the power conversion device 100 coverts the three-phase AC power input from the three-phase AC power supply 200 into the DC power and then outputs it to the battery 400. Also, in a case in which the load driven by the three-phase AC power is connected to the terminals for AC power IT1, IT2, IT3, and the battery 400 is connected to the terminals for DC power DT1, DT2, the power conversion device 100 converts the DC power input from the battery 400 to the three-phase AC power and then outputs it to the load.
Also, as shown in Fig. 3, in a case in which the single-phase AC power supply 300 is connected to the terminals for AC power IT1, IT2, IT3, and the battery 400 is connected to the terminals for DC power DT1, DT2, the power conversion device 100 coverts the single-phase AC power input from the single-phase AC power supply 300 into the DC power and then outputs it to the battery 400. Also, in a case in which the load driven by the single-phase AC power is connected to the terminals for AC power IT1, IT2, IT3, and the battery 400 is connected to the terminals for DC power DT1, DT2, the power conversion device 100 converts the DC power input from the battery 400 to the single-phase AC power and then outputs it to the load.
The three-phase to single-phase matrix converter 110 is connected between the terminals for AC power IT1, IT2, IT3 and the high-frequency transformer 120. For example, in a case in which an AC power supply (for example, a commercial AC power supply with a frequency of 50Hz or 60Hz) is connected to the terminals for AC power IT1, IT2, IT3, the three-phase to single-phase matrix converter 110 coverts the AC power input from this AC power supply to the high-frequency AC power and then outputs this high-frequency AC power to the high-frequency transformer 120.

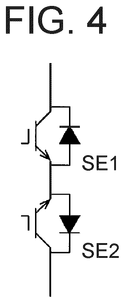

As shown in Fig. 1, the three-phase to single-phase matrix converter 110 includes six switched S11-S16 (that is, a first switch S11, a second switch S12, a third switch S13, a fourth switch S14, a fifth switch S15, and a sixth switch S16). The switches S11-S16 are 2-way switches, wherein for example, as shown in Fig. 4, are configured by connecting two switching elements (for example, IGBTs (Insulated-Gate Bipolar Transistors)) SE1, SE2, each with a diode in parallel, in series such that forward directions of the diodes thereof are opposite to each other. The switches S11-S16 only has to be the 2-way switches, and they are not limited to the configuration shown in Fig. 4.

In the example shown in Fig. 4, if the switching element SE1 is set ON, and the switching element SE2 is set OFF, a current flows in a direction from the switching element SE1 to the switching element SE2, while a current in a direction from the switching element SE2 to the switching element SE1 is restricted. If the switching element SE2 is set ON, and the switching element SE1 is set OFF, the current flows in the direction from the switching element SE2 to the switching element SE1, while the current in the direction from the switching element SE1 to the switching element SE2 is restricted. If both switching elements SE1, SE2 are set ON, it is possible for the current to flow in both directions, and if both switching elements SE1, SE2 are set OFF, the current in both directions is restricted.

The three-phase to single-phase matrix converter 110 includes five terminals T11-T15 (that is, a first terminal T11, a second terminal T12, a third terminal T13, a fourth terminal T14, and a fifth terminal T15). The first terminal T11 is connected to the first terminal for AC power IT1, the second terminal T12 is connected to the second terminal for AC power IT2, The third terminal T13 is connected to the third terminal for AC power IT3. The fourth terminal T14 and the fifth terminal T15 are connected to the high-frequency transformer 120. That is, the first terminal T11 to the third terminal T13 are connected to, via the terminals for AC power IT1-IT3, the AC power supply (the three-phase AC power supply 200, the single-phase AC power 300) and the load, and the three-phase AC power or the single-phase AC power are input to or output from the first terminal T11 to the third terminal T13. On the other hand, the single-phase AC power is input to or output from the fourth terminal T14 and the fifth terminal T15. For example, as shown in Fig. 2, in a case in which the three-phase AC power supply 200 is connected to the terminals for AC power IT1-IT3, the three-phase AC power is input to the first terminal T11 to the third terminal T13, and the single-phase AC power is output from the fourth terminal T14 and the fifth terminal T15. For example, as shown in Fig. 3, in a case in which two terminal among the terminals for AC power IT1-IT3 are connected by the single-phase AC power supply 200, the single-phase AC power is input to the two corresponding terminals connected to such two terminals among the first terminal T11 to the third terminal T13, and the single-phase AC power is output from the fourth terminal T14 and the fifth terminal T15.

The first switch S11 is connected between the first terminal T11 and the fourth terminal T14, the second switch S12 is connected between the first terminal T11 and the fifth terminal T15, the third switch S13 is connected between the second terminal T12 and the fourth terminal T14, the fourth switch S14 is connected between the second terminal T12 and the fifth terminal T15, the fifth switch S15 is connected between the third terminal T13 and the fourth terminal T14, and the sixth switch S16 is connected between the third terminal T13 and the fifth terminal T15.

As shown in Fig. 1, the three-phase to single-phase converter 110 may be connected to the terminals for AC power IT1-IT3 via an input filter IF. That is, as shown in Fig. 1, it may be configured that the input filter IF is connected between the terminals for AC power IT1-IT3 and the first terminal T11 to the third terminal T13 of the three-phase to single-phase matrix converter 110. In the example shown in Fig. 1, the input filter IF is configured by composed of resistors, inductors, and capacitors.

The high-frequency transformer 120 is connected between the three-phase to single-phase converter 110 and the AC-DC converter 130. For example, in a case in which the AC power supply is connected to the terminals for AC power IT1, IT2, IT3, the high-frequency transformer 120 converts a voltage of the high-frequency AC power that is output from three-phase to single-phase matrix converter 110, and output the high-frequency AC power with the transferred voltage to the AC-DC converter 130.

The high-frequency transformer 120 is an insulating type transformer and has two windings W21, W22 (that is, a first winding W21 and a second winding W22). One side of the first winding W21 is connected to the fourth terminal T14 of the three-phase to single-phase matrix converter 110, and the other side of the first winding W21 is connected to the fifth terminal T15 of the three-phase to single-phase matrix converter 110. That is, the first winding W21 is a winding on the side of the three-phase to single-phase matrix converter 110. On the other hand, the second winding W22 is connected to the AC-DC converter 130. That is, the second winding W22 is a winding on the side of the AC-DC converter 130. The high-frequency transformer 120 has a leakage inductor L21.

The AC-DC converter 130 is connected between the terminals for DC power DT1, DT2 and the high-frequency transformer 120. For example, when the AC power supply is connected to the terminals for AC power IT1, IT2, IT3 and the battery 400 is connected to the terminals for DC power DT1, DT2, the AC-DC converter 130 converts the high-frequency AC power output from the high-frequency transformer 120 into the DC power and outputs this DC power to the battery 400.

As shown in Fig. 1, the AC-DC converter 130 has four switches S31-S34 (that is, a first switch S31, a second switch S32, a third switch S33, and a fourth switch S34). The switches S31-S34 of the AC-DC converter 130 are, for example, switching elements (for example, IGBT) with diodes in parallel, respectively.

The AC-DC converter 130 has two terminals for AC power T31, T32 (that is, a first terminal for AC power T31 and a second terminal for AC power T32) and two terminals for DC power T33, T34 (a positive DC power terminal T33 and a negative DC power terminal T34). The first terminal for AC power T31 is connected to one side of the second winding W22 of the high-frequency transformer 120, and the second terminal for AC power T32 is connected to the other side of the second winding W22 of the high-frequency transformer 120. The positive DC power terminal T33 is connected to the positive DC power terminal DT1 of the power conversion device 100, and the negative DC power terminal T34 is connected to the negative DC power terminal DT2 of the power conversion device 100. That is, the positive DC power terminal T33 is connected to the positive pole side of the battery 400 and the load via the positive DC power terminal DT1, and the negative DC power terminal T34 is connected to the negative pole side of the battery 400 and the load via the negative DC power terminal DT2, and the DC power is input to and output from the positive DC power terminal T33 and the negative DC power terminal T34. On the other hand, the single-phase AC power is input to and output from the two terminals for AC power T31, T32. For example, as shown in Fig. 2, in the case in which the three-phase AC power supply 200 is connected to the terminals for AC power IT1-IT3, or as shown in Fig. 3, in the case in which the single-phase AC power supply 200 is connected to two of the terminals for AC power IT1-IT3, the high-frequency single-phase AC power is input to the terminals for AC power terminals T31, T32, and the DC power is output from the terminals for DC power T33, T34.

The four switches S31 to S34 configure a full bridge circuit, in which the first switch S31 is connected between the first terminal for AC power T31 and the positive DC power terminal T33, the second switch S32 is connected between the first terminal for AC power T31 and the negative DC power terminal T34, the third switch S33 is connected between the second terminal for AC power T32 and the positive DC power terminal T33, and the fourth switch S34 is connected between the second terminal for AC power T32 and the negative DC power terminal T34.

As shown in Fig. 1, the AC-DC converter 130 may be connected to the terminals for DC power DT1, DT2 of the power conversion device 100 via an output filter OF. That is, as shown in Fig. 1, it may be configured that the output filter OF is connected between the terminals for DC power T33, T34 of the AC-DC converter 130 and the terminals for DC power DT1, DT2 of the power conversion device 100. In the example shown in Fig. 1, the output filter OF is composed of resistors, inductors, and capacitors.

The control portion 140 controls the switches S11-S16 of the three-phase to single-phase matrix converter 110 and the switches S31-S34 of the AC-DC converter 130. The control portion 140 is formed of, for example, a computer.

As described above, the power conversion device 100 according to the present embodiment includes the three-phase to single-phase matrix converter 110, the high-frequency transformer 120, and the AC-DC converter 130. Therefore, it is possible to convert the three-phase AC power into the DC power and output the DC power, or it is possible to convert the DC power into the three-phase AC power and output the three-phase AC power.

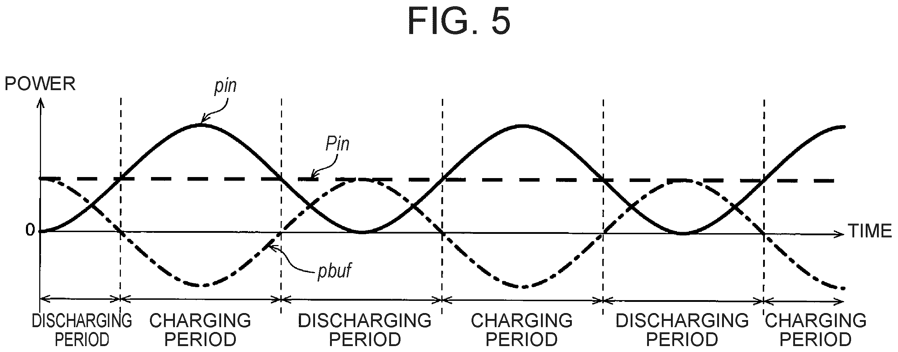

As shown in Fig. 3, in the case in which the single-phase AC power supply 300 is connected to two of the three terminals for AC power IT1-IT3 (in the example shown in Fig. 3, the terminals for AC power IT1, IT3), the single-phase AC power is input to the three-phase to single-phase matrix converter 110. The value of the input power input from the three-phase AC power supply 200 is constant, however, the instantaneous power value pin of the input power input from the single-phase AC power supply 300 ripples as shown in Fig. 5. As shown below, the instantaneous power value pin(t) of the input power input from the single-phase AC power supply 300 is the sum of the average power value Pin and the ripple portion prip(t) of the input power that is input from the single-phase AC power supply 300, and as shown by the solid line in Fig. 5, it ripples around the average power value Pin (shown as the dashed line in Fig. 5).

[Math 1]

$$pin(t) = Pin + prip(t)$$

Therefore, in order to compensate for this ripple, the power conversion device 100 according to the present embodiment further includes a power ripple compensation circuit 150. The power ripple compensation circuit 150 includes an inductor L51, a capacitor Cbuf, a first terminal T51, and a second terminal T52, wherein the inductor L51 and the capacitor Cbuf are connected in series between the first terminal T51 and the second terminal T52. In the example shown in Fig. 1, the inductor L51 is connected to the first terminal T51 side, and the capacitor Cbuf is connected to the second terminal T52 side. The first terminal T51 is connected to a center tap of the second winding W22 (the coil on the AC-DC converter 130 side) of the high-frequency transformer 120, and the second terminal T52 is connected to the negative DC power terminal T34 of the AC-DC converter 130 (that is, the negative pole side of the AC-DC converter 130). In other words, the power ripple compensation circuit 150 is connected between the center tap of the second winding W22 (the coil on the AC-DC converter 130 side) of the high-frequency transformer 120 and the negative DC power terminal T34 of the AC-DC converter 130 (that is, the negative pole side of the AC-DC converter 130).

Then, when the single-phase AC power supply 300 is connected to the terminals for AC power IT1-IT3 (that is, the single-phase AC power supply 300 is connected to the three-phase to single-phase matrix converter 110), the control portion 140 controls the switches S11-S16 of the three-phase to single-phase matrix converter 110 and the switches S31-S34 of the AC-DC converter 130 so as to compensate for the ripple of the input power pin from the single-phase AC power 300 due to the power ripple compensation circuit 150 by using the capacitor Cbuf of the power ripple compensation circuit 150, and then keeps the output voltage Vout output from the power conversion device 100 constant.

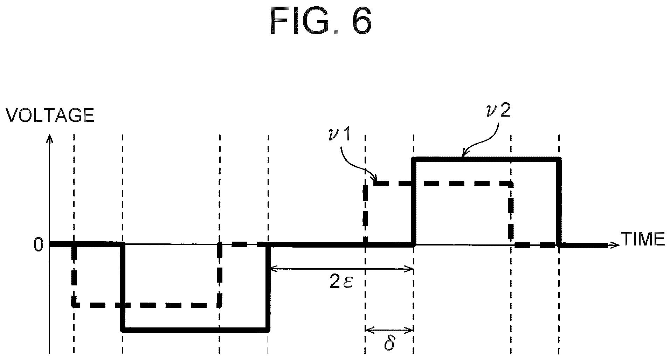

At this time, in the power conversion device 100 according to the present embodiment, the control style is changed depending on whether the instantaneous power value pin of the input power that is input from the single-phase AC power supply 300 is higher than an average power value Pin of this input power (pin>Pin) or whether the instantaneous power value pin of the input power that is input from the single-phase AC power supply 300 is lower than the average power value Pin of this input power (pin<Pin). At this time, as shown in Fig. 6, the control portion 140 controls the switching of the switches S11-S16 of the three-phase to single-phase matrix converter 110 and the switches S31-S34 of the AC-DC converter 130 so as to include a period (zero voltage period) during which a voltage difference between the first terminal T31 and the second terminal T32 of the AC-DC converter 130, that is, the voltage value of the voltage input to the AC-DC converter 130 (an input voltage v2 (bold line in Fig. 6)) becomes zero. During this zero voltage period, the power transmission from the three-phase to single-phase matrix converter 110 side to the AC-DC converter 130 side is not performed.

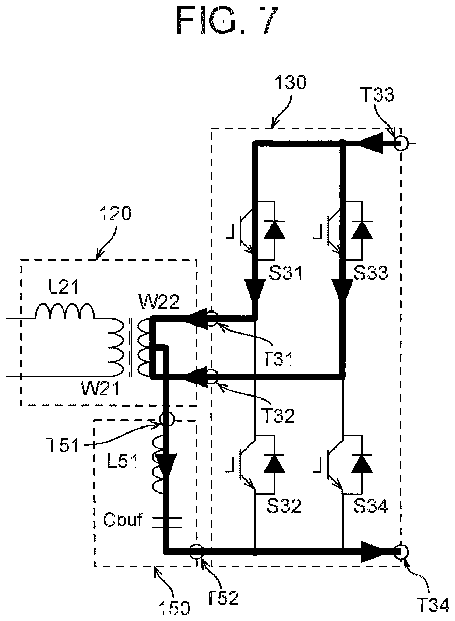

For example, when the instantaneous power value pin of the input power that is input from the single-phase AC power supply 300 is higher than the average power value Pin (pin>Pin), during this zero voltage period, as shown in Fig. 7, the control portion 140 controls the switches S31, S33 of the AC-DC converter 130 (that is, the switches on the positive pole side of the AC-DC converter) to be ON, and controls the switches S32, S34 of the AC-DC converter 130 (that is, the switches on the negative pole side of the AC-DC converter 130) be OFF, and then the ripple portion prip of the instantaneous power value pin of the input power that is input from the single-phase AC power supply 300 is charged to the capacitor Cbuf of the power ripple compensation circuit 150 such that a constant power is output from the power conversion device 100. In other words, according to the present embodiment, the period during which the instantaneous power value pin of the input power that is input from the single-phase AC power supply 300 is higher than the average power value Pin is the period during which the capacitor Cbuf is charged (charging period), and the instantaneous power value pbuf of the power output from the capacitor Cbuf becomes negative, as shown by the dotted line in Fig. 5.

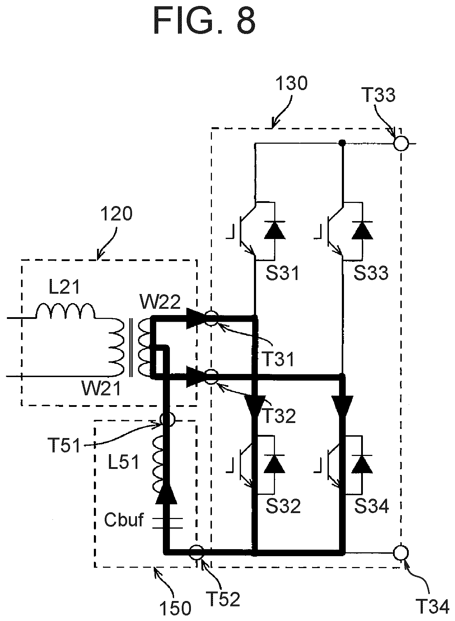

On the other hand, when the instantaneous power value pin of the input power that is input from the single-phase AC power supply 300 is lower than the average power value Pin (pin<Pin), during the zero voltage period, as shown in Fig. 8, the control portion 140 controls the switches S31, S33 of the AC-DC converter 130 (that is, the switches on the positive pole side of the AC-DC converter) to be OFF, and controls the switches S32, S34 of the AC-DC converter 130 (that is, the switches on the negative pole side of the AC-DC converter 130) to be ON, and then the capacitor Cbuf is discharged and the power pbuf output from this capacitor Cbuf compensates for the ripple portion prip, which is the difference between the instantaneous power value pin and the average power value Pin of the input power that is input from the single-phase AC power supply 300, such that a constant power is output from the power conversion device 100. In other words, according to the present embodiment, the period during which the instantaneous power value pin of the input power input from the single-phase AC power supply 300 is lower than the average power value Pin is the period during which the capacitor Cbuf discharges (discharging period), and the instantaneous power value pbuf of the power that is output from the capacitor Cbuf becomes positive, as shown by the dotted line in Fig. 5.

As described above, according to the present embodiment, the control portion 140 controls the switching of the switches S31-S34 of the AC-DC converter 130 during the zero voltage period such that the sum of the instantaneous power value pin of the input power that is input from the single-phase AC power supply 300 and the instantaneous power value pbuf of the power that is output from the capacitor Cbuf (that is, the output voltage Pout from the power conversion device 100) is constant, and charges and discharges the capacitor Cbuf.

Therefore, according to the present embodiment, it is possible to convert the single-phase AC power into the DC power after compensating for ripple using the three-phase to single-phase matrix converter 110. As a result, according to the present embodiment, the DC link converter is unnecessary, and it is possible to provide a compact power conversion device. The capacitor Cbuf of the power ripple compensation circuit 150 may have a significantly smaller capacity than the DC link capacitor used in a conventional charger, and can be configured by a film capacitor with a long life.

Also, according to the present embodiment, by changing the power transmission direction, it is possible to convert the DC power stored in the battery 400 into the single-phase AC power. Therefore, the power conversion device 100 according to the present embodiment is also compatible with so-called V2X (Vehicle to X).

<parameters for switching control>

As described above, as shown in Fig. 6, the control portion 140 controls the switching of the switches S11-S16 of the three-phase to single-phase matrix converter 110 and the switches S31-S34 of the AC-DC converter 130 so as to include the zero voltage period. At this time, the switching control by the control portion 140 is determined based on, an instantaneous voltage value vin of the input voltage input from the single-phase AC power supply 300, a frequency $\omega$in of the input voltage input from the single-phase AC power supply 300, an instantaneous power value pin of the input power input from the single-phase AC power supply 300, an output voltage Vout to the battery 400, turns ratio N (=(number of turns n1 of the winding W21)/(number of turns n2 of the winding W22)) of the high-frequency transformer 120, an inductance value Lleak of the leakage inductor L21 of the high-frequency transformer 120, a target output voltage value vbuf from the capacitor Cbuf of the power ripple compensation circuit 150, a phase difference $\delta$ between the switching of the switches S11-S16 of the three-phase to single-phase matrix converter 110 and the switching of the switches S31-S34 of the AC-DC converter 130, and the length $2\varepsilon$ of the zero voltage period. As shown in Fig. 6, the phase difference $\delta$ is also the phase difference between the output voltage v1 output from the three-phase to single-phase matrix converter 110 and the input voltage v2 input to the AC-DC converter 130.

Here, the length $2\varepsilon$ of the zero voltage period is calculated based on the output voltage value Vout and the target output voltage value vbuf from the capacitor Cbuf as follows.
[Math 2]

$$2\varepsilon = \pi \cdot \left(\frac{2vbuf}{Vout} - 1\right) \qquad (1)$$

Here, the phase difference $\delta$ is calculated as follows based on the instantaneous voltage value vin of the input voltage, the frequency $\omega$in of the input voltage, the instantaneous power value pin of the input power, the output voltage value Vout, the turns ratio N, the leakage inductance value Lleak, the target output voltage value vbuf from the capacitor Cbuf of the power ripple compensation circuit 150, and the length $2\varepsilon$ of the zero voltage period.
[Math 3]

$$\delta = \text{sgn}(pin) \cdot \left(\pi - 2|\varepsilon| - \sqrt{(\pi - 2|\varepsilon|)^2 - \frac{4\pi \cdot \omega in \cdot Lleak}{N \cdot vin \cdot Vout} \cdot |pin|}\right) \quad (2)$$

Here, the target output voltage value vbuf from the capacitor Cbuf of the power ripple compensation circuit 150 is calculated based on the instantaneous voltage value vin of the input voltage, the instantaneous power value pin of the input power, and the output voltage value Vout.

Fig. 6 shows, in addition to the input voltage v1 of the AC-DC converter 130, the voltage difference between the fourth terminal T14 and the fifth terminal T15 of the three-phase to single-phase matrix converter 110, that is, the voltage value of the voltage output from the three-phase to single-phase matrix converter 110 (output voltage v1 (dashed line in FIG. 6)). If the phase difference $\delta$ is not longer than the length $2\varepsilon$ of the zero voltage period, there is a portion where the zero voltage period of the output voltage v1 of the three-phase to single-phase matrix converter 110 and the zero voltage period of the AC-DC converter 130 overlap with each other, as shown in Fig. 6.

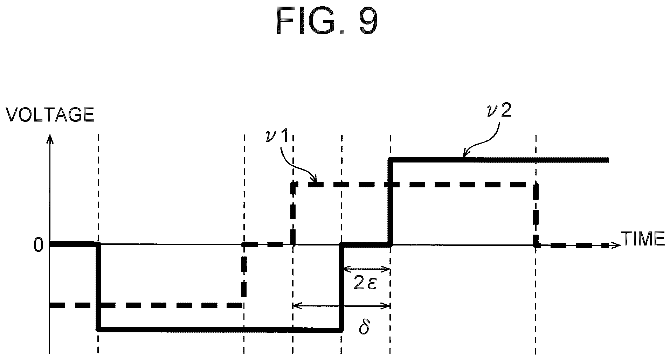

However, when the length $2\varepsilon$ of the zero voltage period becomes shorter and the phase difference $\delta$ becomes longer than the length $2\varepsilon$ of the zero voltage period, the zero voltage period of the output voltage v1 of the three-phase to single-phase matrix converter 110 and the zero voltage period of the AC-DC converter 130 do not overlap each other, as shown in Fig. 9. If the switching control is performed during this period based on the value of the phase difference $\delta$ calculated using equation (2), an error occurs in the transmission power.

Therefore, according to the present embodiment, the control portion 140 changes the method of calculating the value of the phase difference $\delta$ used when generating the switching patterns for the switches S11-S16 of the three-phase to single-phase matrix converter 110 and the switches S31-S34 of the AC-DC converter 130, based on whether the phase difference $\delta$ is longer than the length $2\varepsilon$ of the zero voltage period.

More specifically, if the phase difference $\delta$ is not longer than the length $2\varepsilon$ of the zero voltage period ($\delta \leq 2\varepsilon$), the control portion 140 uses the above-described equation (2) to calculate the phase difference $\delta$, generates the switching pattern of the switches S11-S16 of the three-phase to single-phase matrix converter 110 and the switches S31-S34 of the AC-DC converter 130 based on the calculated phase difference $\delta$, and uses this generated switching pattern to control the switches S11-S16 of the three-phase to single-phase matrix converter 110 and the switches S31-S34 of the AC-DC converter 130.

On the other hand, if the phase difference δ is not longer than the length of the zero voltage period 2ε (δ>2ε), the control portion 140 uses the following equation (3) to calculate the phase difference δ, based on the instantaneous voltage value vin of the input voltage, the frequency ωin of the input voltage, the instantaneous power value pin of the input power, the output voltage value Vout, the turn ratio N, the leakage inductance value Lleak, the target output voltage value vbuf from the capacitor Cbuf of the power ripple compensation circuit 150, and the length 2ε of the zero voltage period.
[Math 4]

$$\delta = \text{sgn}(pin) \cdot \left( \frac{\pi}{2} - \sqrt{\pi^2 - 8|\varepsilon|^2 - \frac{4\pi \cdot \omega in \cdot Lleak}{N \cdot vin \cdot Vout} \cdot |pin|} \right) \quad (3)$$

Then, if the phase difference δ is longer than the length 2ε of the zero voltage period, the control portion 140 generates the switching pattern for the switches S11-S16 of the three-phase to single-phase matrix converter 110 and the switches S31-S34 of the AC-DC converter 130 based on the phase difference δ calculated using the above equation (3), and controls the switching of the switches S11-S16 of the three-phase to single-phase matrix converter 110 and the switches S31-S34 of the AC-DC converter 130 using the generated switching pattern.

Therefore, according to the present embodiment, the output voltage Vout output to the battery 400 is smoothed. As a result, it is possible to perform efficient charging while suppressing heat generation and deterioration of the battery 400. Furthermore, according to the present embodiment, it is possible to convert the DC power stored in the battery 400 into the single-phase AC power by changing the power transmission direction. At this time, the single-phase AC power output from the power conversion device 100 according to the present embodiment is also smoothed. As a result, according to the present embodiment, it is possible to perform efficient discharging while suppressing heat generation and deterioration of the battery 400.

<processing operations in control portion 140>

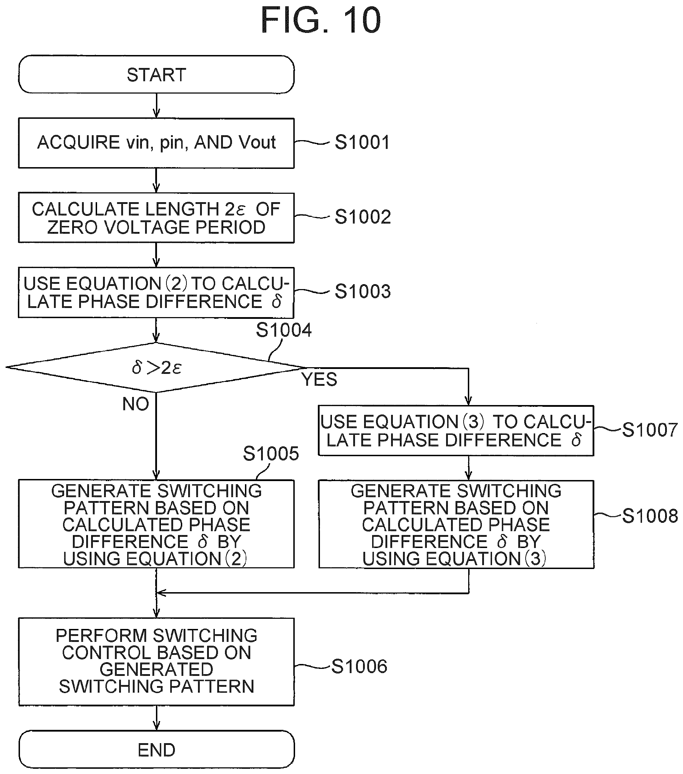

Fig. 10 is a view showing an example of processing operations executed by the control portion 140. The processing operations shown in Fig. 10 are executed, for example, at predetermined time intervals.

The control portion 140 acquires the instantaneous voltage value vin of the input voltage, the instantaneous power value pin of the input power, and the output voltage value Vout (Step S1001), and calculates a target output voltage value vbuf from the capacitor Cbuf based on the acquired instantaneous voltage value vin of the input voltage, the instantaneous power value pin of the input power, and the output voltage value Vout, and further calculates the length 2ε of the zero voltage period using the above-described equation (1) based on the acquired instantaneous voltage value vin of the input voltage and the calculated target output voltage value vbuf (Step S1002). The control portion 140 calculates the phase difference δ using the above-described equation (2) (Step S1003).

If the phase difference δ is not longer than the length 2ε of the zero voltage period (Step S1004, NO), the control portion 140 generates the switching pattern for the switches S11-S16 of the three-phase to single-phase matrix converter 110 and the switches S31-S34 of the AC-DC converter 130 based on the phase difference δ calculated using the above-described equation (2) (Step S1005), and then using the generated switching pattern to control the switching of the switches S11-S16 of the three-phase to single-phase matrix converter 110 and the switches S31-S34 of the AC-DC converter 130 (Step S1006).

If the phase difference δ is longer than the length 2ε of the zero voltage period (Step S1004, YES), the control portion 140 calculates the phase difference δ using the above-described equation (3) (Step S1007), and generates the switching pattern for the switches S11-S16 of the three-phase to single-phase matrix converter 110 and the switches S31-S34 of the AC-DC converter 130 based on the phase difference δ calculated using the above-described equation (3) (Step S1008), and using the generated switching pattern to control the switching of the switches S11-S16 of the three-phase to single-phase matrix converter 110 and the switches S31-S34 of the AC-DC converter 130 (Step S1006).

<control during connection of three-phase AC power supply 200>

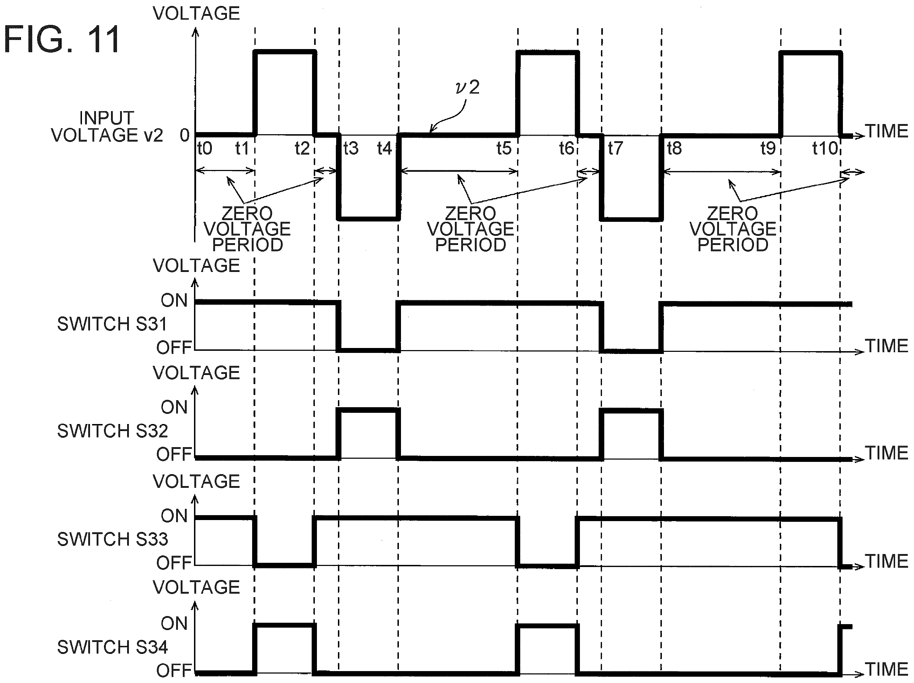

As shown in Fig. 2, in a case in which the three-phase AC power supply 200 is connected to the three terminals for AC power IT1-IT3, the three-phase AC power is input to the three-phase to single-phase matrix converter 110. The value of the input power that is input from the three-phase AC power supply 200 is constant such that it is different from the input power that is input from the single-phase AC power 300, there is not any ripple in the instantaneous power value pin, and it is unnecessary for performing the ripple compensation by the power ripple compensation circuit 150. Also, in the case in which the single-phase AC power supply 300 is connected to the three terminals for AC power IT1-IT3, in a case in which the control portion 140 controls switching of the switches S11-S16 of the three-phase to single-phase matrix converter 110 and the switches S31-S34 of the AC-DC converter 130 so as to include the period (zero voltage period) when the value of the voltage (input voltage v2) input to the AC-DC converter 130 becomes zero as shown in Fig. 11, the charging and discharging of the capacitor Cbuf of the power ripple compensation circuit 150 during this zero voltage period occur such that the charging and discharging may affect the output voltage Vout output from the power conversion device 100. In the example shown in Fig. 11, the periods t0-t1, t2-t3, t4-t5, t6-t7, and t8-t9 are zero voltage periods, and in Fig. 11, the switching with respect to the switches S31-S34 of the AC-DC converter 130 when controlling switching of the switches S11-S16 of the three-phase to single-phase matrix converter 110 and the switches S31-S34 of the AC-DC converter 130 so as to include zero voltage period is also shown. In the example shown in Fig. 11, regarding the switching control with respect to the switches S31-S34 of the AC-DC converter 130, the switching control during the period t1-t5 is repeated.

When the switches on the positive pole side of the AC-DC converter 130 (the switches S31, S33 of the AC-DC converter 130) is ON, and when the switches on the negative pole side of the AC-DC converter 130 (the switches S32, S34 of the AC-DC converter 130) is ON, the voltage value of the voltage input to the AC-DC converter 130 becomes zero. That is, during the zero voltage period, either of the switches on the positive pole side of the AC-DC converter 130 (the switches S31, S33 of the AC-DC converter 130) or the switches on the negative pole side of the AC-DC converter 130 (the switches S32, S34 of the AC-DC converter 130) is ON. As described above, when controlling the switches on the positive pole side of the AC-DC converter 130 (the switches S31, S33 of the AC-DC converter 130) to be ON, while controlling the negative pole side of the AC-DC converter 130 (the switches S32, S34 of the AC-DC converter 130) to be OFF, as shown in Fig. 7, the capacitor Cbuf of the power ripple compensation circuit 150 is charged, and when controlling the switches on the positive pole side of the AC-DC converter 130 (the switches S31, S33 of the AC-DC converter 130) to be OFF, while controlling the negative pole side of the AC-DC converter 130 (the switches S32, S34 of the AC-DC converter 130) to be ON, as shown in Fig. 8, the capacitor Cbuf 150 is discharged.

Therefore, as shown in Fig. 11, in a case of controlling the switches on the positive pole side of the AC-DC converter 130 (the switches S31, S33 of the AC-DC converter 130) to always be ON during the zero voltage period, during the zero voltage period, there is a period when the switches on the positive pole side of the AC-DC converter 130 (the switches S31, S33 of the AC-DC converter 130) is ON while the switches on the negative pole side of the AC-DC converter 130 (the switches S32, S34 of the AC-DC converter 130) is OFF (that is, the charging period), however, on the other hand, there is not any period when the switches on the negative pole side of the AC-DC converter 130 (the switches S32, S34 of the AC-DC converter 130) is ON while the switches on the positive pole side of the AC-DC converter 130 (the switches S31, S33 of the AC-DC converter 130) is OFF (that is, the discharging period), and the capacitor Cbuf is continuously charged and it will not discharge.

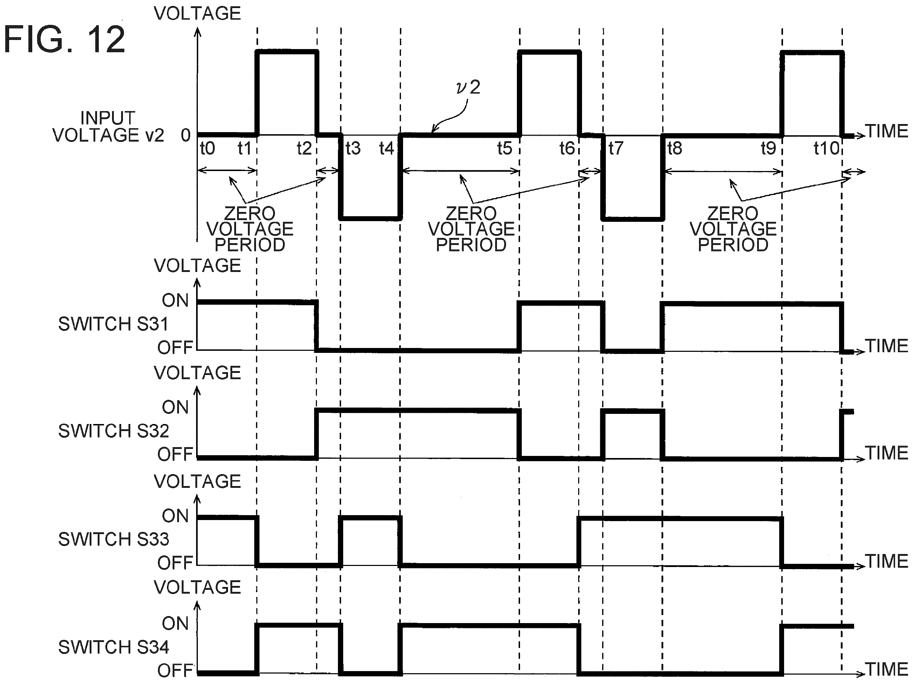

Therefore, if the three-phase AC power supply 200 is connected to the three terminals for AC power IT1-IT3, during the zero voltage period, it is preferable for the control portion 140 to control the switches S31-S34 of the AC-DC converter 130 (for example, see Fig. 12) such that the period when the switches on the positive pole side of the AC-DC converter 130 (the switches S31, S33 of the AC-DC converter 130) are ON while the switches on the negative pole side of the AC-DC converter 130 (the switches S32, S34 of the AC-DC converter 130) are OFF (that is, the charging period), and the period when the switches on the negative pole side of the AC-DC converter 130 (the switches S32, S34 of the AC-DC converter 130) are ON while the switches on the positive pole side of the AC-DC converter 130 (the switches S31, S33 of the AC-DC converter 130) are OFF (that is, the discharging period) are equal to each other. In the example shown in Fig. 12, regarding the switching control for the switches S31-S34 of the AC-DC converter 130, the switching control is repeated during the period t1-t9. In the example shown in Fig. 12, in the zero voltage period (the period t2-t3, t4-t5, t6-t7, t8-t9) during the period t1-t9, the charging period (the period t6-t7, t8-t9) and the discharging period (the period t2-t3, t4-t5) are equal to each other.

In this manner, the period when the capacitor Cbuf is charged (charging period) and the period when the capacitor Cbuf is discharged (discharging period) become equal to each other, an average charge-discharge power of the capacitor Cbuf of the power ripple compensation circuit 150 becomes zero such that it is possible to make the voltage of the power ripple compensation circuit 150 to be almost constant. As a result, it is possible to reduce the effect of charging and discharging the capacitor Cbuf of the power ripple compensation circuit 150 on the output voltage Vout output from the power conversion device 100.

<switch S51 of power ripple compensation circuit 150>

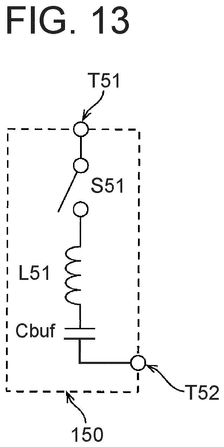

As shown in Fig. 13, it is preferable for the power ripple compensation circuit 150 to further include a switch S51. As shown in Fig. 13, the switch S51 is connected in series with the inductor L51 and the capacitor Cbuf between the first terminal T51 (that is, the center tap of the second winding W22 (the coil on the AC-DC converter 130 side) of the high-frequency transformer 120) and the second terminal T52 (that is, the negative DC power terminal T34 of the AC-DC converter 130 (that is, the negative pole side of the AC-DC converter 130)). In the example shown in Fig. 13, the switch S51 is connected between the first terminal T51 and the inductor L51. The switch S51 may be a relay, or may be configured by connecting two switching elements SE1, SE2, each with a diode connected in parallel, in series such that the forward directions of the diodes are opposite to each other, as shown in Fig. 4. Then, the control portion 140 may control the switch S51 to be turned OFF when the three-phase AC power supply 200 is connected to the three AC power terminals IT1-IT3.

In this manner, it is possible to prevent the charging and discharging of the capacitor Cbuf of the power ripple compensation circuit 150 from affecting the output voltage Vout output from the power conversion device 100. It is also possible to prevent unnecessary loss of power in the power ripple compensation circuit 150.

At this time, the control unit 140 may detect that the three-phase AC power supply 200 is connected to the three terminals for AC power IT1-IT3 based on the voltages at the terminals for AC power IT1-IT3, or may detect this based on communication or commands from external configurations.

Hereinbefore, the present invention has been described through suitable embodiments of the present invention. Here, the present invention has been described by showing specific examples, however, such specific examples can be applied with various modifications and changes without departing from the sprit and range of the present invention as recited in the enclosed claims.

[REFERENCE SIGNS LIST]

    100 power conversion device
    110 three-phase to single-phase matrix converter
    S11-S16 switches of three-phase to single-phase matrix converter 110
    120 high-frequency transformer
    L21 leakage inductor of high-frequency transformer 120
    W21 winding of high-frequency transformer 120 at side of three-phase to single-phase matrix converter 110
    W22 winding of high-frequency transformer 120 at side of AC-DC converter 130
    130 AC-DC converter
    S31-S34 switches of AC-DC converter 130
    140 control portion
    150 power ripple compensation circuit
    Cbuf capacitor of power ripple compensation circuit 150
    S51 switch of power ripple compensation circuit 150
    200 three-phase AC power supply
    300 single-phase AC power supply
    400 battery
    IF input filter
    OF output filter

Claims

1.  A power conversion device (100), comprising:

        a three-phase to single-phase matrix converter (110);
        an AC-DC converter (130);
        a transformer (120) connected between the three-phase to single-phase matrix converter (110) and the AC-DC converter (130); and
        a power ripple compensation circuit (150) including an inductor (L51) and a capacitor (Cbuf) connected in series, wherein the power ripple compensation circuit (150) is connected between a center tap of a winding (W22) on the AC-DC converter (130) side of the transformer (120) and a negative pole side of the AC-DC converter (130).

2.  The power conversion device (100) according to claim 1, further comprises a control portion (140) for controlling a switch (S11, S12, S13, S14, S15, S16) of the three-phase to single-phase matrix converter (110) and a switch (S31, S32, S33, S34) of the AC-DC converter (130),
    wherein the control portion (140) is configured to, when a single-phase AC power supply (300) is connected to the three-phase to single-phase matrix converter (110), control the switch (S11, S12, S13, S14, S15, S16) of the three-phase to single-phase matrix converter (110) and the switch (S31, S32, S33, S34) of the AC-DC converter (130) so as to use the capacitor (Cbuf) of the power ripple compensation circuit (150) to compensate a ripple of an input power that is input from the single-phase AC power supply (300).

3. The power conversion device (100) according to claim 2,
wherein the control portion (140) is configured to:

control the switch (S31, S32, S33, S34) of the AC-DC converter (130), during a period as a charging period when an instantaneous power value (pin) of an input power that is input from the single-phase AC power supply (300) is higher than an average power value (Pin) input from the single-phase AC power supply (300), such that the capacitor (Cbuf) of the power ripple compensation circuit (150) is charged, and
control the switch (S31, S32, S33, S34) of the AC-DC converter (130), during a period as a discharging period when the instantaneous power value (pin) of the input power that is input from the single-phase AC power supply (300) is lower than the average power value (Pin) input from the single-phase AC power supply (300), such that the capacitor (Cbuf) of the power ripple compensation circuit (150) discharges the charged power.

4. The power conversion device (100) according to claim 3, wherein the control portion (140) is configured to control the switch (S11, S12, S13, S14, S15, S16) of the three-phase to single-phase matrix converter (110) and the switch (S31, S32, S33, S34) of the AC-DC converter (130) such that an input voltage that is input from the transformer (120) to the AC-DC converter (130) includes the zero voltage period.

5. The power conversion device (100) according to claim 4, wherein the control portion (140) is configured to, during the zero voltage period in the charging period, control the switch (S31, S33) on a positive pole side of the AC-DC converter (130) to be ON, and control the switch (S32, S34) on a negative pole side of the AC-DC converter (130) to be OFF.

6. The power conversion device (100) according to claim 4 or 5, wherein the control portion (140) is configured to, during the zero voltage period in the discharging period, control the switch (S31, S33) on a positive pole side of the AC-DC converter (130) to be OFF, and control the switch (S32, S34) on a negative pole side of the AC-DC converter (130) to be ON.

7. The power conversion device (100) according to claim 1, wherein the power conversion device (100) is installed in an automobile.

8. The power conversion device (100) according to claim 4, wherein the control portion (140) is configured to control the switches (S31, S32, S33, S34) of the AC-DC converter (130) during the zero voltage period when the three-phase AC power (300) is connected to the three-phase to single-phase matrix converter (110) such that a period when the switch (S31, S33) on the positive pole side of the AC-DC converter (130) is ON while the switch (S32, S34) on the negative pole side of the AC-DC converter (130) is OFF, and a period when the switch (S32, S34) on the negative pole side of the AC-DC converter (130) is ON while the switch (S31, S33) on the positive pole side of the AC-DC converter (130) is OFF become equal to each other.

9. The power conversion device (100) according to claim 2, wherein the power ripple compensation circuit (150) further comprises a switch (S51) connected in series with the inductor (L51) and the capacitor (Cbuf).

10. The power conversion device (100) according to claim 9, wherein the control portion (140) controls the switch (S51) of the power ripple compensation circuit (150) to be off if the three-phase AC power (300) is connected to the three-phase to single-phase matrix converter (110).

11. A control method executed by a computer for controlling a power conversion device (100),

wherein the power conversion device (100) comprises:

a three-phase to single-phase matrix converter (110);
an AC-DC converter (130);
a transformer (120) connected between the three-phase to single-phase matrix converter (110) and the AC-DC converter (130); and
a power ripple compensation circuit (150) including an inductor (L51) and a capacitor (Cbuf) connected in series,

wherein the power ripple compensation circuit (150) is connected between a center tap of a winding (W22) on the AC-DC converter (130) side of the transformer (120) and a negative pole side of the AC-DC converter (130), the control method comprising a step of controlling a switch (S11, S12, S13, S14, S15, S16) of the three-phase to single-phase matrix converter (110) and a switch (S31, S32, S33, S34) of the AC-DC converter (130) so as to use the capacitor (Cbuf) of the power ripple compensation circuit (150) to compensate a ripple of an input power that is input from a single-phase AC power supply (300) when the single-phase AC power supply (300) is connected to the three-phase to single-phase matrix converter.

12. A control program for making the control method according to claim 11 to be executed by a computer.

# FIG. 1

FIG. 2

# FIG. 3

EP 4 712 326 A1

# FIG. 4

SE1

SE2

# FIG. 5

EP 4 712 326 A1

# FIG. 6

# FIG. 7

# FIG. 8

# FIG. 9

# FIG. 10

```
┌─────────────────────────────┐
│           START             │
└─────────────────────────────┘
              │
              ▼
┌─────────────────────────────┐
│  ACQUIRE vin, pin, AND Vout  │── S1001
└─────────────────────────────┘
              │
              ▼
┌─────────────────────────────┐
│  CALCULATE LENGTH 2ε OF      │── S1002
│  ZERO VOLTAGE PERIOD         │
└─────────────────────────────┘
              │
              ▼
┌─────────────────────────────┐
│  USE EQUATION (2) TO CALCU-  │── S1003
│  LATE PHASE DIFFERENCE δ     │
└─────────────────────────────┘
              │        S1004
              ▼
        ╱─────────────╲
       ╱   δ > 2ε       ╲──── YES ────────────────┐
       ╲               ╱                           │
        ╲─────────────╱                            ▼
            │ NO                      ┌─────────────────────────────┐
            │                         │  USE EQUATION (3) TO CALCU-  │── S1007
            │   S1005                 │  LATE PHASE DIFFERENCE δ     │
            ▼                         └─────────────────────────────┘
┌─────────────────────────────┐                    │
│  GENERATE SWITCHING          │                    ▼
│  PATTERN BASED ON            │      ┌─────────────────────────────┐
│  CALCULATED PHASE            │      │  GENERATE SWITCHING          │── S1008
│  DIFFERENCE δ BY             │      │  PATTERN BASED ON            │
│  USING EQUATION (2)          │      │  CALCULATED PHASE            │
└─────────────────────────────┘      │  DIFFERENCE δ BY             │
            │                         │  USING EQUATION (3)          │
            │                         └─────────────────────────────┘
            │◄───────────────────────────────────┘
            ▼
┌─────────────────────────────┐
│  PERFORM SWITCHING           │
│  CONTROL BASED ON            │── S1006
│  GENERATED                   │
│  SWITCHING PATTERN           │
└─────────────────────────────┘
            │
            ▼
┌─────────────────────────────┐
│           END               │
└─────────────────────────────┘
```

FIG. 11

VOLTAGE

INPUT
VOLTAGE v2   0

$\nu 2$

ZERO
VOLTAGE
PERIOD

ZERO
VOLTAGE
PERIOD

ZERO
VOLTAGE
PERIOD

t0  t1  t2  t3  t4  t5  t6  t7  t8  t9  t10

TIME

VOLTAGE

ON

SWITCH S31

OFF

TIME

VOLTAGE

ON

SWITCH S32

OFF

TIME

VOLTAGE

ON

SWITCH S33

OFF

TIME

VOLTAGE

ON

SWITCH S34

OFF

TIME

EP 4 712 326 A1

# FIG. 12

# FIG. 13

T51

S51

L51

Cbuf

T52

150

| | Europäisches Patentamt European Patent Office Office européen des brevets | **EUROPEAN SEARCH REPORT** | Application Number EP 25 19 6984 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/094151 A1 (GOH TECK CHIANG [JP] ET AL) 31 March 2016 (2016-03-31) * figures 1,11,14 * * paragraphs [0029], [0032], [0040] – [0042], [0078], [0084] – [0088] * ----- | 1-12 | INV. H02M1/10 H02M1/14 H02M3/335 H02M5/293 H02M5/297 |
| X | TAKAOKA NAGISA ET AL: "Battery energy storage system with isolated single-phase matrix converter using center-tapped transformer for power decoupling capability", 2015 INTERNATIONAL CONFERENCE ON RENEWABLE ENERGY RESEARCH AND APPLICATIONS (ICRERA), IEEE, 22 November 2015 (2015-11-22), pages 1021-1026, XP032873835, DOI: 10.1109/ICRERA.2015.7418564 [retrieved on 2016-02-23] * figures 2-5 * * Sections I, III A., III B. * ----- | 1-12 | ADD. H02M5/12 H02M7/48 |
| A | KODAKA WATARU ET AL: "Power Decoupling Method Using Input Filters in a Matrix Converter for Isolated AC-DC Converters Fed by Single- or Three-Phase Supply", 2021 IEEE ENERGY CONVERSION CONGRESS AND EXPOSITION (ECCE), IEEE, 10 October 2021 (2021-10-10), pages 1860-1867, XP034019956, DOI: 10.1109/ECCE47101.2021.9595118 [retrieved on 2021-10-29] * figure 1 * ----- | 1-12 | TECHNICAL FIELDS SEARCHED (IPC) H02M |
| A | WO 2023/227205 A1 (HUAWEI DIGITAL POWER TECH CO LTD [CN]; GAONA DANIEL [DE]) 30 November 2023 (2023-11-30) * figures 1a, 1b, 3, 5 ,8 * ----- -/-- | 1-12 | |

The present search report has been drawn up for all claims

| Place of search | Date of completion of the search | Examiner |
|---|---|---|
| The Hague | 29 January 2026 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................
& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 25 19 6984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/399624 A1 (BROWN ALAN WAYNE [US] ET AL) 23 December 2021 (2021-12-23) * figure 2 * ----- | 1-12 | |
| A | CAI ZHE ET AL: "A new three voltage level space vector modulation for high-frequency link matrix converter", 20230810, vol. 12748, 10 August 2023 (2023-08-10), pages 127483L-127483L, XP060185955, ISSN: 0277-786X, DOI: 10.1117/12.2689712 ISBN: 978-1-5106-6744-0 * figures 1,3,4 * ----- | 4-8 | |

TECHNICAL FIELDS
SEARCHED      (IPC)

The present search report has been drawn up for all claims

| Place of search | Date of completion of the search | Examiner |
|---|---|---|
| The Hague | 29 January 2026 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 6984

This annex lists the patent family members relating to the patent documents cited in  the above-mentioned European search report.
The members are as contained in the European Patent Office EDP file on
The European Patent Office is in no way liable for these particulars which are merely given for the purpose of information.

29-01-2026

| Patent document cited in search report | | Publication date | Patent family member(s) | | Publication date |
|---|---|---|---|---|---|
| US 2016094151 | A1 | 31-03-2016 | JP | 6102872 B2 | 29-03-2017 |
| | | | JP | 2016067123 A | 28-04-2016 |
| | | | US | 2016094151 A1 | 31-03-2016 |
| WO 2023227205 | A1 | 30-11-2023 | CN | 119213680 A | 27-12-2024 |
| | | | EP | 4515668 A1 | 05-03-2025 |
| | | | US | 2025096699 A1 | 20-03-2025 |
| | | | WO | 2023227205 A1 | 30-11-2023 |
| US 2021399624 | A1 | 23-12-2021 | CN | 112956105 A | 11-06-2021 |
| | | | EP | 3874577 A1 | 08-09-2021 |
| | | | US | 2021399624 A1 | 23-12-2021 |
| | | | WO | 2020089739 A1 | 07-05-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013158240 A
- JP 2017528102 A